# EUROPEAN PATENT SPECIFICATION

(11) **EP 3 197 785 B1**
(45) Date of publication and mention of the grant of the patent: **06.02.2019**
(21) Application number: 15756667.0
(22) Date of filing: 02.09.2015
(51) Int. Cl.: B65B 61/20, B65G 47/29, B65G 47/26

(54) **A METHOD OF OPERATING AN APPARATUS FOR APPLYING DRINKING STRAWS TO PACKAGING CONTAINERS AND AN APPARATUS OPERATED BY THE METHOD**
VERFAHREN ZUM BETRIEB EINER VORRICHTUNG ZUM ANBRINGEN VON TRINKHALMEN AN VERPACKUNGSBEHÄLTERN UND MIT DEM VERFAHREN BETRIEBENE VORRICHTUNG
PROCÉDÉ DE FONCTIONNEMENT D'UN APPAREIL DESTINÉ À APPLIQUER DES PAILLES À BOIRE À DES RÉCIPIENTS D'EMBALLAGE ET UN APPAREIL MIS EN UVRE PAR LE PROCÉDÉ

(30) Priority: 26.09.2014 SE 1451136
(43) Date of publication of application: 02.08.2017
(73) Proprietor: Tetra Laval Holdings & Finance S.A., 1009 Pully (CH)
(72) Inventor: BERGLIN, Michael, S-211 30 Malmö (SE); OLSSON, Lennart, S-245 63 Hjärup (SE)
(74) Representative: Tetra Pak - Patent Attorneys SE
(86) International application number: PCT/EP2015/070041
(87) International publication number: WO 2016/045921

(56) References cited:
- EP-A1- 0 216 284
- US-A- 3 747 739
- US-A- 4 372 797
- US-A- 5 197 586

## Description

### TECHNICAL FIELD

The present invention relates to a method for operating an apparatus for applying drinking straws to packaging containers, and to an apparatus operated according to the method.

### BACKGROUND ART

Many packaging containers for liquid food are manufactured in so-called portion volumes, intended to be consumed direct from the package. The majority of these packages are provided with drinking straws in a protective envelope which is secured to the one side wall of the packaging container. The packaging containers, which are often parallelepipedic in shape, are manufactured from a laminate with a core of paper or paperboard, with layers of thermoplastics and possibly aluminum foil. On the one wall of the packaging container - most often the top wall - a hole has been punched out in the core layer and this hole is covered by the other layers of the laminate, which makes it possible to penetrate the hole with the drinking straw which accompanies the packaging container, and hereby consume the drink enclosed in the package.

There have long been machines which apply drinking straws in their protective envelopes to packaging containers which are conveyed through the machine. Such a machine, i.e. a drinking straw applicator, is, for example, described in the European Patent Specification EP- 1 042 172. The applicator functions in that a belt of continuous drinking straw envelopes with drinking straws is guided in towards and surrounds a drive means. Adjacent the drive means, there are devices for severing the drinking straw belt into individual drinking straws enclosed in a protective envelope, as well as devices for applying the drinking straw to one side wall of the packaging container, the packaging container being advanced on a conveyor through the machine. Prior to the moment of application, the envelope drinking straw is provided with securement points. The securement points may, for example, consist of hot melt, which is molten glue which glues the drinking straw envelope in place and retains it when the glue has hardened. In this applicator the drive means rotates continuously and the device for separating drinking straws is disposed to accompany a part distance of the rotation of the drive means. Also the conveyor is driven continuously, and the device for applying drinking straws is disposed to accompany a part distance of the movement of the conveyor belt.

The machine is able to apply straws to packaging containers of various sizes. The pitch between succeeding packaging containers is set as a percentage of the length of the packaging container in the conveying direction. This means that the pitch will vary from batch to batch of packaging containers, and the mechanics of the machine are sized to fit all pitch values. Further, the movement of packaging containers is normally detected by a sensor positioned along the conveyor just upstream the applicator, and the speeds of the drive means and the device for separating drinking straws are adjusted in accordance with the distance to the packaging container. Between passages of packaging containers the motors driving the drive means, the device for separating straws and the device for applying straws are temporarily stopped, awaiting a succeeding packaging container to arrive at the sensor, before starting again. The machine can be used for handling up to 30 000 packages/hour in an efficient and accurate way. However, in ultra high speed production, handling approx. 50 000 packages/hour, the start and stop type of operation give rise to large accelerations and decelerations which have proven to put considerable strain on the one or more motors involved. In addition, for some packaging sizes, the vibrations in the mechanics of the machine will be considerable. Hence, the machine is not suitable for ultra high speed production. Also EP 0216284 A1 discloses an apparatus for applying drinking straws according to preamble of claim 7.

### OBJECT OF THE INVENTION

One object of the present invention is to realise a method for operating a machine for applying drinking straws to packaging containers, which method minimizes vibrations and provides a smooth operation also in ultra high speed production. The object is solved by a method comprising the steps of conveying packaging containers, on a first conveyor, past an application device and performing a straw application cycle comprising the steps of conveying a continuous belt of drinking straws wrapped in protective envelopes by rotating a drive means, separating a drinking straw with the envelope from the belt by means of a separation device, and applying the separated drinking straw with envelope to a wall of the packaging container by means of the application device when the packaging container passes the application device. The method further comprises the steps of synchronously driving the drive means, the separation device and the application device by a drive unit, and adjusting the pitch, between the packaging containers being transported on the first conveyor to the application device, by means of a pitch control device upstream the application device, such that the pitch becomes substantially equal between succeeding packaging containers and equal for all packaging sizes with an operational range of packaging sizes. In this way the apparatus may be dimensioned and balanced of for the set pitch and vibrations can be considerably reduced.

In one or more embodiments method comprises the step of, during operation, driving the drive unit with a minimum of speed variations. In this way large accelerations and decelerations can be avoided which minimize the torque on the drive unit. This makes it possible to drive the apparatus at ultra high speeds; handling about 50 000 packages per hour.

In one or more embodiments the method comprises the step of, during operation, driving the drive unit continuously at a substantially constant speed.In this way large accelerations and decelerations can be avoided which minimize the torque on the drive unit. This makes it possible to drive the apparatus at ultra high speeds; handling about 50 000 packages per hour.

In one or more embodiments the method comprises the step of slowing down and queuing up the packaging containers in a belt brake comprised in the pitch control device, said belt brake comprising at least one belt which is adapted to act on the packaging container, during transportation of the packaging container on the first conveyor, in such a way that the packaging container slides against a packaging container conveyor surface of the first conveyor.

In one or more embodiments the method comprises the step of producing the pitch by providing a second conveyor in the pitch control device, said second conveyor having a packaging container conveyor surface adapted to come into contact with the packaging container once the packaging container reaches a downstream, outlet end of the belt brake, and moving the conveyor surfaces of the first and second conveyors with the same speed, said speed being higher than that of the belt of the belt brake.

In one or more embodiments the method comprises the step of driving the drive means and the separation device by a first servo motor comprised in the drive unit, and driving the application device by a second servo motor comprised in the drive unit.

The object is also solved by an apparatus for applying drinking straws to packaging containers, said apparatus comprising a drive means adapted for conveying a continuous belt of drinking straws wrapped in protective envelopes, a separation device adapted to separate a drinking straw with envelope from the belt, an application device adapted to apply the separated drinking straw with envelope to a wall of the packaging container, a drive unit for synchronously driving the drive means, the separation device and the application device at least during a straw application cycle, a first conveyor adapted for conveying packaging containers past the application device. Said apparatus also comprises a pitch control device positioned upstream the application device, and said apparatus is adapted to be operated according to the method of claim 1.

In one or more embodiments the pitch control device comprises a belt brake, which belt brake comprises at least one belt which is adapted to act on the packaging container during transportation of the packaging container on the first conveyor, and wherein the belt brake is adapted to slow down the transportation of the packaging container and to thereby make the packaging container slide against a packaging container conveyor surface of the first conveyor.

In one or more embodiments the pitch control device comprises a second conveyor, and a packaging container conveyor surface of the second conveyor is adapted to come into contact with the packaging container once the packaging container reaches a downstream, outlet end of the belt brake, and the conveyor surfaces of the first and second conveyors are adapted to move with the same speed, and the belt of the belt brake is adapted to move at a lower speed thereby creating the pitch between two succeeding packaging containers.

In one or more further embodiments the belt of the belt brake and the packaging container conveyor surface of the first conveyor extend, during portions thereof, parallel to each other along the transport direction.

In one or more embodiments the belt brake is adapted to receive packaging containers being transported on the first conveyor, and form a queue of said packaging containers, said queue being moved, by the belt, towards the outlet end of the belt brake.

In one or more embodiments the speed of the packaging container conveyor surfaces of the first and second conveyors in relation to the speed of the belt of the belt brake create the pitch between succeeding packaging containers, and that the pitch is fixed to a set value.

In one or more further embodiments the drive means is adapted for rotation, the separation device is adapted to accompany a part distance of the rotation of the drive means, and the application device is adapted to accompany a part distance of the movement of the conveyor during the application cycle.

In one or more embodiments the apparatus comprises a sensing device positioned downstream the belt brake, which sensing device is adapted to detect a packaging container being transported by the first conveyor, and wherein, during operation of the apparatus, the operation of the drive unit is adjusted, based on detection of a packaging container, such that the application cycle is correctly timed in relation to the position of the packaging container.

In one or more embodiments the drive unit comprises a first servo motor, which first servo motor is adapted to drive the drive means and the separation device, and wherein the drive unit comprises a second servo motor, which second servo motor is adapted to drive the application device.

The invention also comprises a method of manufacturing an apparatus for applying drinking straws to packaging containers. The method comprises the steps of setting a pitch value for succeeding packaging containers, and dimensioning and balancing the drive means, the separation device, the application device and the drive unit to fit said pitch value.

### BRIEF DESCRIPTION OF THE ACCOMPANYING DRAWING

One preferred embodiment of the present invention will now be described in greater detail hereinbelow, with reference to the accompanying drawing, in which:
Fig. 1 is a schematic illustration, in plan view, of some of the central parts of the apparatus according to the present invention.
Fig. 2 is a schematic illustration in isometric view of the apparatus according to the present invention.
Fig. 3 is a schematic illustration, in top view, of two packaging containers and a conveyor.
Fig. 4 is two schematic illustrations of packaging containers, in top view, one showing fixed pitch between succeeding packaging containers irrespective of size, and one showing fixed pitch between succeeding packaging containers, but not across different sizes.
Fig. 5 is two graphs showing the torques on one of the servo motors with 1) start and stop operation and varying pitch between packaging container sizes and with 2) substantially constant speed and fixed pitch between succeeding packaging containers irrespective of packaging container size.

The drawings show only those details essential to an understanding of the present invention, and the remaining parts of the apparatus, which are well-known to a person skilled in the art, have been omitted.

### DESCRIPTION OF PREFERRED EMBODIMENT

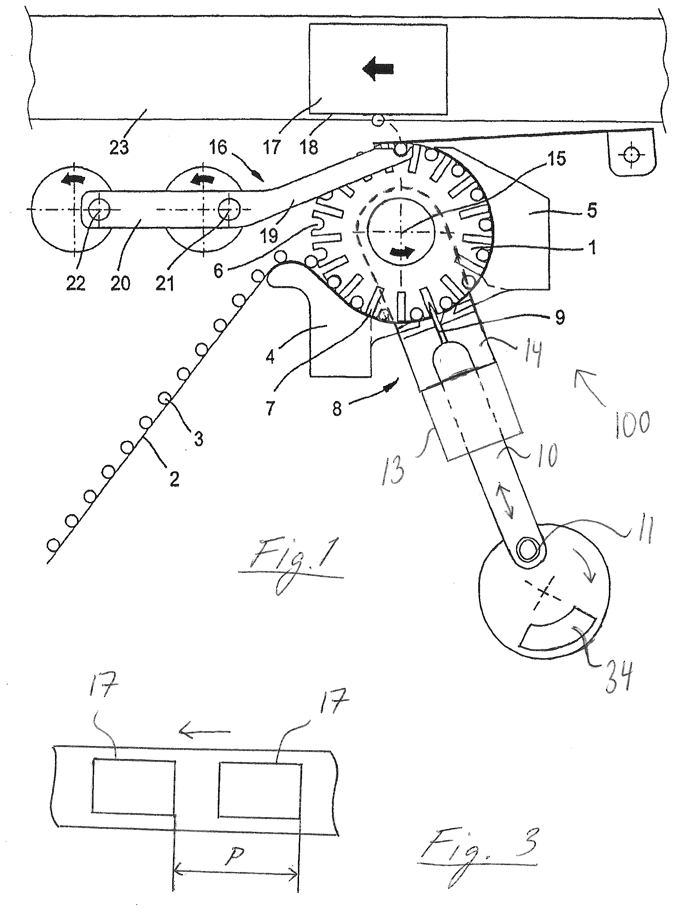

Fig. 1 shows some of the central parts of the apparatus 100. The apparatus comprises a drive means 1, a so-called feeder wheel. A continuous belt 2 of drinking straws 3, wrapped in protective envelopes, is advanced to the drive means 1. The belt 2 of drinking straws 3 is advanced via guides (not shown) as well as guides 4 and 5 surrounding the drive means 1 and which retain the belt 2 of drinking straws 3 against the drive means 1. The drive means is adapted to rotate by means of a first motor (not shown), e.g. a servo motor, of a drive unit. The servo motor is preferably arranged displaced from the drive means 1, and is connected to a centre shaft 15 of the drive means 1 via a belt and/or cogwheels/gears (not shown).

On its circumferential surface, the drive means 1 has a number of recesses 6 which are each intended for one drinking straw 3. The number of recesses 6 on the drive means 1 depends on the thickness and design of the drinking straw 3, and the pitch between straws in the belt. In a conventional belt of straight and telescopic straws the pitch is e.g. 15 mm, whereas for U-shaped straws the pitch is e.g. 22 mm.

Between each recess 6 on the circumferential surface of the drive means 1, there is disposed a groove 7. The groove 7 is intended to receive a knife 9 of a separation device 8 for separating individual drinking straws 3, and their envelopes, from the belt 2.

The separation device 8, for separating the drinking straws 3, comprises the knife 9, which knife 9 is fixedly mounted in a holder 10. The holder 10 is journalled on an eccentric shaft 11. A centre shaft of a disc 12, to which the eccentric shaft 11 is fixed, is driven by the first servo motor via the same belt and/or cogwheels/gears driving the drive means 1. Hence, the separation device 8 and the drive means 1 are mechanically interconnected and both the rotation of the drive means 1 and the motion of the separation device 8 are driven by the first servo motor. Further, the knife holder 10 is journalled in an axial bearing 13, which bearing is fixedly attached to a rod 14 rotatably journalled around the centre shaft 15 of the drive means 1.

The apparatus 100 further includes an application device 16 for applying a drinking straw 3 on one side wall 18 of a packaging container 17. The application device 16 comprises two applicator arms 19. With two cooperating applicator arms 19, a more reliable and efficient placing of the drinking straws 3 on the side wall 18 of the packaging containers 17 will be obtained.

The arms 19 are oriented above one another and are united by means of a bracket 20, which may in principle consist of an extension of the applicator arms 19. The bracket 20 is journalled in two eccentric shafts 21, 22 which have the same eccentricity. The drive means 1 is provided with parallel grooves (not shown) along its circumference. The applicator arms 19 are arranged to move in these grooves, and at at least one point be arranged in between the drive means and a separated straw 3, to be able to pick the straw 3 and carry it towards the side wall 18 of a packaging container 17. The application device 16 is driven by a second motor (not shown), e.g. a servo motor, of the drive unit. The second servo motor drives the application device 8 via a belt and/or cogwheels/gears.

Alternatively, the application device 16, the separation device 8 and the drive means 1 are all mechanically interconnected and driven by one and the same servo motor via a belt and/or cogwheels/gears.

The apparatus 100 further comprises a first, lower conveyor 23, passing by the drive means 1, for conveying the packaging containers 17 which are to be supplied with drinking straws 3. The conveyor 23 may consist of an endless, driven belt. Only a portion of the conveyor is shown in Fig. 1.

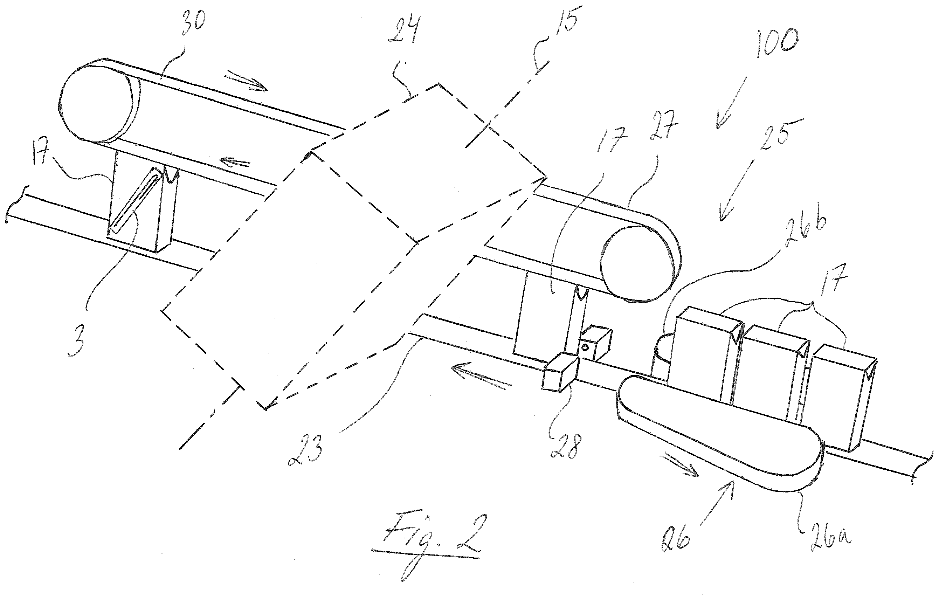

The drive means 1, the application device 16 and the separation device 8 are designed such that it may be variably inclined in relation to the conveyor 23. In this way the packaging containers 17, which are advanced with their bottom surface bearing on the horizontal conveyor 23, will have the drinking straws 3 placed in the desired angle of inclination on the side wall 18. The inclination depends on both the volume of the packaging container 17 and on the size and shape of the drinking straw 3. Fig. 2, showing the entire apparatus 100, illustrates the inclination. For simplification the drive means 1, the separation device 8 and the application device 16 are shown as a box 24 drawn with dashed lines. An axis illustrating the inclination of the centre shaft 15 of the drive means 1 is shown, and a packaging container is also shown having a straw applied with a similar inclination.

The drive means 1, which is disposed to rotate continuously, is the central unit in the apparatus 100, see Fig. 1 again. It is the drive means 1 which transports the drinking straws 3 round from when the continuous belt 2 of drinking straws 3 wrapped in protective envelopes reaches the apparatus 100 via a number of guides (not shown), around the circumferential surface of the drive means 1, past the separation device 8 to the application device 16. The drive means 1 moves with a gear ratio from the first servo motor which depends on the number of recesses 6 on the circumferential surface of the drive means 1. The drive means 1 rotates one division, i.e. one recess 6 for each packaging container 17 which passes the drive means 1. For example, a drive means 1 for straight drinking straws 3 may have a gear ratio of 17:1 and a drive means 1 for U-shaped drinking straws may have a gear ratio of 12:1.

The separation device 8, for separating a straw 3, in its envelope, from the rest of the belt 2 executes two movements during each separation cycle. On the one hand, the knife 9 reciprocates radially in relation to the drive means 1 and into the groove 7 in order to be able to separate one drinking straw 3 from the belt 2. On the other hand, the separation device 8 must accompany the continuously rotating drive means 1 during that time when the separation cycle is in progress. These two movements are simultaneously achieved by means of the eccentricity of the shaft 11 and the alternating, pivoting motion (counterclockwise and clockwise) of the rod 14 around the shaft 15 of the drive means 1.

Once the separation cycle is completed and the knife 9 has severed one drinking straw 3, in its protective envelope, from the continuous belt 2, the separation device 8 returns to its starting position and begins a new separation cycle.

The first conveyor 23 moves tangentially in relation to the drive means 1 and conveys the packaging containers 17, which are to be provided with drinking straws 3, past the drive means 1. The first conveyor 23 moves at a speed which is synchronised with the speed of the drive means 1, the separation device 8 and the application device 16. Before the separated straws 3 are picked by the application device 16, their envelopes have been provided, on one of their side surfaces, with securement points, preferably two in number, which may, for example, consist of glue, preferably so called hot melt. The securement points are to glue in place and, once the hot melt glue has set, retain the drinking straw 3 in its protective envelope against the side wall 18 of the packaging container 17.

The application device 16 for applying drinking straws 3 on the side walls 18 of the packaging containers 17 describes, by means of the two eccentric shafts 21, 22, a circular or alternatively elliptic movement so that the arms 19 move in towards the drive means 1 and entrap a drinking straw 3. The drinking straw 3 is moved by the rotating movement towards the side wall 18 of the packaging container 17 and is kept in position by means of the securement points. As a result of the second servo motor and requisite gear ratios, the applicator arms 19 now move at the same speed at which the conveyor 23 (and thereby also the packaging container 17) moves, and the applicator arms 19 accompany, in their rotating movement, the packaging container 17 and the conveyor 23 a short distance before the rotational movement recuperates the applicator arms 19 back to their starting position where they begin a new application cycle.

By means of Fig. 2 more parts of the apparatus 100 will be described. The apparatus 100 comprises a packaging container sensing device 28 for sensing a packaging container 17 passing on the first, lower conveyor 23. The sensing device 28 comprises any conventional type of sensor, e.g. a photocell arrangement, able to detect a passing packaging container. The sensing device 28 is arranged upstream the drive means 1. The photocell arrangement is in two parts, said parts being aligned and facing each other in a direction perpendicular to the transport direction of the lower conveyor 23. The two parts are shown in Fig. 2.

The sensing device 28 is positioned at a fixed distance from the position where the application device 16 applies the straw 3 onto the packaging container 17. Passage of a packaging container sends a signal to a control device (not shown) of the apparatus, e.g. a PLC, which will time the movements of the drive means 1, separation device 8 and the application device 16 based on the detection of the packaging container being transported on the lower conveyor 23. The timing is made by accelerating or decelerating the first and second servo motors of the drive unit and in that way the straw will be applied at a correct position on the packaging container once the packaging container reaches the application device 16. Hence, with regard to the sensing device 28 and the control device any pitch can be dealt with, e.g. if the pitch between succeeding packaging containers is not exactly equal, or even highly differs between two succeeding packaging containers, it will still work since the application cycle is individually timed for each passing packaging container by acceleration or deceleration of the first and second servo motors.

In the above the drive means 1, the application device 16 and the separation device 8 have been described as well their operation during an application cycle. In the following, and with reference to Fig. 2, some further parts of the apparatus will be described .

In Fig. 2 the drive means 1, the application device 16, the separation device 8 and the associated servo motors etc. are shown, for simplification, as a box 24 in dashed lines. Fig. 2 further shows the previously described first conveyor 23 and the sensing device 28 being parts of the apparatus of the present invention. The apparatus 100 further comprises a pitch control device 25 for controlling the pitch, i.e. the distance, between succeeding packaging containers 17 being fed to the drive means 1. The definition of pitch is illustrated by means of Fig. 3. The pitch, denoted P, is the distance between similar points on two succeeding packaging containers 17. In the figure the pitch P is measured from a back surface of a leading packaging container to the back surface of a trailing, or succeeding, packaging container.

The pitch control device 25 is arranged upstream the drive means 1 and comprises a packaging container decceleration device 26, e.g. a belt brake, and a second, upper conveyor 27.

The decceleration device 26, being a belt brake in this embodiment, is arranged upstream the sensing device 28 and the second upper conveyor 27. The belt brake has belts 26a, 26b on each side of the lower conveyor 23. The belts 26a, 26b are partly running in parallel with the transported packaging containers 17 in such a way that said belts are adapted to come into contact with two opposed side walls of each packaging container, and decelerate and transport the packaging container at a velocity being less than that of the conveyor 23. Hence, the belts 26a, 26b are adapted to create higher friction against the packaging container 17 than the friction between the packaging container 17 and the lower conveyor 23. The packaging container will thus slide against the lower container 23 and queue up, or line up, in the belt brake 26.

The second, upper conveyor 27 is arranged above a portion of the first, lower conveyor 23, and is adapted to help transporting the packaging containers by supporting their top surface. The upper conveyor also keeps track of the position of the packaging container in relation to the application device, in that a third servo motor (not shown) used for driving the conveyor, is used, based on the servo motor speed, to calculate the time before the packaging container passes the application device. The upper conveyor 27 comprises a belt 30 adapted to bear against the top surface of the packaging container. The upper conveyor 27 is positioned such that it will come into contact with a packaging container while the packaging container is about to leave the belt brake 26. This position, where the upper conveyor 27 contacts the packaging container 17, is upstream the sensing device 28. The distance between the packaging container transport surface of the lower conveyor 23 and the lower end of the belt 30 of the upper conveyor 27 equals the packaging container height, and can be adjusted to fit different packaging container sizes. Preferably, for this reason, the upper conveyor 27 is displaceable in relation to the lower conveyor 23.

The pitch control device 25 operates as follows. The velocities of the first, lower conveyor 23 and the second, upper conveyor 27 are set substantially equal. The velocity of the belts 26a, 26b of the belt brake 26 is set to be slower. Hence, as mentioned above, the packaging containers 17 will queue up once reaching the belt brake 26. Upon advancement of the packaging containers 17 through the belt brake 26, the packaging containers 17 will reach the downstream end of the belt brake 26. Just before leaving the belt brake 26 the packaging container will reach the upstream end of the upper conveyor 27. The upper and lower conveyors 23, 27 will then "pick" the packaging container 17 at the downstream end of the belt brake 26, and change its velocity to that of the upper and lower conveyors 23, 27. Due to the lower velocity of the belt brake 26, compared to that of the upper and lower conveyors 23, 27, the "picking" action will create a distance, pitch P (Fig. 3), between succeeding packaging containers 17. The packaging container 17 will proceed to the sensing device 28 which is positioned at a fixed distance from the position where the application device 16 applies the straw 3 onto the packaging container 17. The control device will time the movement of the drive means 1, separation device 8 and the application device 16 based on the detection of a packaging container, such that the straw 3 will be applied at a correct position on the packaging container once the packaging container reaches the application device 16. This is to adjust to small variations in the pitch which may naturally still exist.

In the following a method of operating the apparatus at ultra high speeds will be described, as well as manufacturing steps facilitating the operation method.

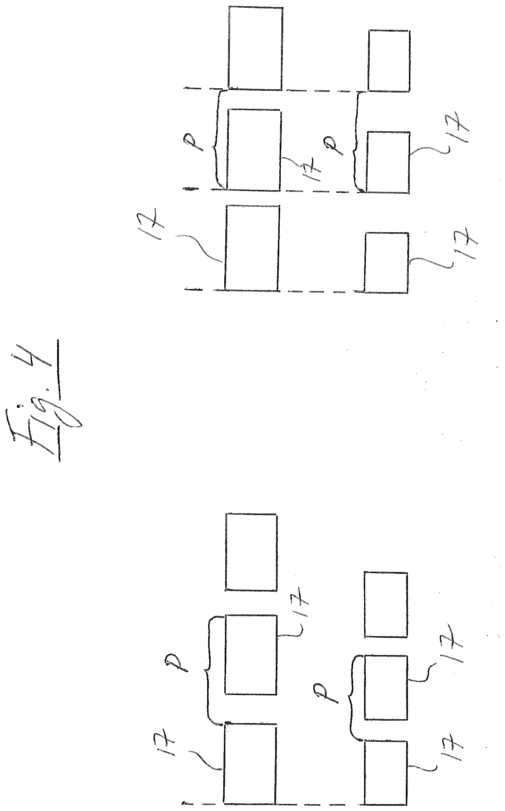

Firstly, a pitch value is set, i.e. the pitch between succeeding packaging containers is set. The pitch value will be the same irrespective of the size of the packaging container, for sizes within an operational range of the apparatus. This means that the pitch will be the same for all packaging containers to be processed through the apparatus. Pitch is further illustrated in Fig. 4. The right hand side shows equal pitch for all packaging container sizes. As can be seen larger packaging containers will have smaller interspaces between them, than smaller packaging containers. However, when being conveyed, the larger packaging containers will arrive at the application device with the same cycle time as the smaller packaging containers, provided the conveying speed is equal for the two sizes. This is to be compared with prior art, which is illustrated on the left hand side. Packaging containers are shown which are of two different sizes, similar to the right hand side, but the pitch is a percentage of the length L of the packaging container in a conveying direction, for example P=1,3*L. This means that although the pitch is equal for succeeding packaging containers of the same size, the pitch will differ compared to that of another packaging container size. Hence, the straw application cycle time will differ between sizes, and the mechanics of the drive unit, the drive means, the separation device and the application device cannot be dimensioned and balanced for a predefined pitch working for all sizes that the apparatus can handle. This gives rise to vibrations in the apparatus, which vibrations can be considerably minimised if manufacturing and operating the apparatus according to a fixed, pre-set pitch which is valid for all packaging container sizes. Then, the mechanics can be dimensioned and balanced for the pre-set pitch, which give rise to a smooth operation for all packaging container sizes.

Secondly, the drive unit is driven at a substantially constant speed, i.e. with a minimum of speed variations, as much as possible minimizing frequent, considerable accelerations and decelerations of the servo motors of the drive unit. The speeds of the servo motors are set by the apparatus' control device, which also controls the synchronization of the movements of the drive means 1, the separation device 8 and the application device 16, as well as of the conveyors transporting the packaging containers. If the pitch is set to 80 mm the drive unit will not go down into stop/standby mode (standstill of drive unit) if there is a packaging container coming within a pitch of 130 mm. It will decelerate some.

The prior art apparatus was driven in a more intermittent way, i.e. starting and stopping the drive unit between packaging containers, i.e. between straw application cycles, giving rise to large accelerations and decelerations.

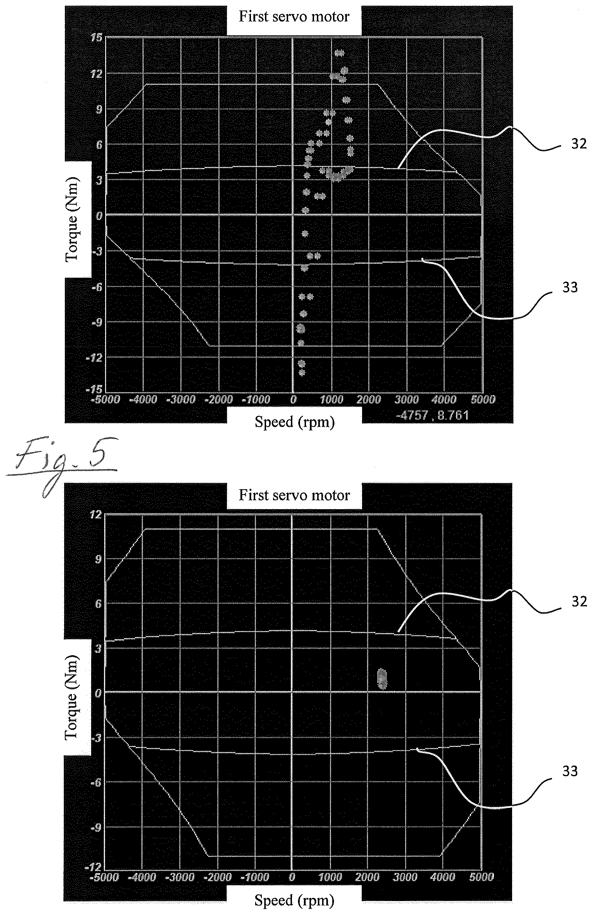

The change to a more constant speed has a very positive effect on the torques affecting the servo motors. Fig. 5 shows two graphs illustrating measurements of torque versus speed of the first servo motor, driving the drive means and the separation device. The uppermost graph shows the operation at a variable pitch between packaging container sizes and operation frequently using start and stop between application cycles. It can be seen that the accelerations and decelerations needed give rise to high speed (revolutions per minute) variations as well as high torques in the motor. The operation gives rise to considerable vibrations in the apparatus and heat in the motor. Some torques are even outside of an acceptable operational window the boundaries of which can be seen as an upper line 32 and a lower line 33. The lowermost graph instead shows operation with a fixed pitch and a less speed variations, i.e. operation of the apparatus according to the invention. The torque of the motor is much more stable during operation, irrespective of packaging container size, and all the measured values are well within the acceptable operational window.

In a test at normal operation, handling 48 000 packaging containers per hour, in an apparatus with a set pitch of 80 mm, the average pitch between succeeding packaging containers was found to be 79,51 mm. The minimum pitch between two succeeding packaging container was 75,33 mm and the standard deviation was 1,49 mm. At the same time the packaging container speed through the apparatus was held at 1m/s +/- 1,5%.

A typical operational range of packaging container sizes is 100-500 ml, being considered as "portion packs" for consumption on the go. A typical such packaging container type is one marketed by the applicant under the trademark Tetra Brik Aseptic. It exits in many volumes within the range of 100-500 ml, various base formats, heights and designs, and straws are an optional feature.

By operating the apparatus with a fixed pitch for all packaging sizes to be handled in the apparatus some or all parts of the mechanism of the apparatus can be optimised based on the set pitch and can for example be balanced with counter weights, or balance weights, for the set pitch. The movements of the drive means 1, the separation device 8 and the application device 16 are designed according to the set pitch. This considerably decreases vibrations in the apparatus. As an example, a counterweight 34 (see Fig. 1) is arranged on the separation device 8. The balancing of the mechanism will not be described in further detail since it is dependent on the design of the various elements of the apparatus.

The present invention should not be considered as restricted to the embodiment described above and shown in the drawings. It is apparent for a person skilled in the art that many modifications are being conceivable without departing from the scope of the appended claims.

For example, an apparatus according to the present invention may instead be employed for applying other objects such as, for example, spoons or the like which are intended to accompany the package 17 to the consumer.

## Claims

1. A method of operating an apparatus (100) for applying drinking straws (3) to packaging containers (17), the method comprising the steps of:
- conveying packaging containers (17), on a first conveyor (23), past an application device (16) and a drive means (1),
- performing a straw application cycle by a synchronous movement of the application device and the drive means, comprising the steps of:
- conveying a continuous belt (2) of drinking straws (3) wrapped in protective envelopes by rotating the drive means (1),
- separating the drinking straw (3) with the envelope from the belt (2) by means of a separation device (8),
- applying the separated drinking straw (3) with envelope to a wall of the packaging container (17) by means of the application device (16) when the packaging container passes the application device,
- synchronously driving the drive means (1), the separation device (8) and the application device (16) by a drive unit, **characterised in that** the method further comprises the steps of:
- adjusting a pitch (P), between the packaging containers (17) being transported on the first conveyor (23) to the application device (16), by means of a pitch control device (25) upstream the application device (16), such that the pitch becomes substantially equal between succeeding packaging containers and equal for all packaging sizes with an operational range of packaging sizes for the apparatus (100), the pitch (P) is the distance between corresponding points on two succeeding packaging containers.

2. The method according to claim 1, wherein the method comprises the step of, during operation, driving the drive unit with a minimum of speed variations.

3. The method according to any of claims 1-2, wherein the method comprises the step of, during operation, driving the drive unit continuously at a substantially constant speed.

4. The method according to any of the claims 1-3, wherein the method comprises the step of slowing down and queuing up the packaging containers (17) in a belt brake (26) comprised in the pitch control device (25), said belt brake (26) comprising at least one belt which is adapted to act on the packaging container, during transportation of the packaging container on the first conveyor (23), in such a way that the packaging container slides against a packaging container conveyor surface of the first conveyor (23).

5. The method according to claim 4, wherein the method comprises the step of producing the pitch (P) by providing a second conveyor (27) in the pitch control device (25), said second conveyor (27) having a packaging container conveyor surface adapted to come into contact with the packaging container once the packaging container reaches a downstream, outlet end of the belt brake (26), and moving the conveyor surfaces of the first and second conveyors (23, 27) with the same speed, said speed being higher than that of the belt of the belt brake (26).

6. The method according to any of claims 4-5, wherein the method comprises the step of driving the drive means (1) and the separation device (7) by a first servo motor comprised in the drive unit, and driving the application device (16) by a second servo motor comprised in the drive unit.

7. An apparatus (100) for applying drinking straws (3) to packaging containers (17), comprising,
a drive means (1) adapted for conveying a continuous belt (2) of drinking straws (3) wrapped in protective envelopes,
a separation device (8) adapted to separate a drinking straw (3) with envelope from the belt (2),
an application device (16) adapted to apply the separated drinking straw (3) with envelope to a wall of the packaging container (17),
a drive unit for synchronously driving the drive means (1), the separation device (8) and the application device (16) at least during a straw application cycle,
a first conveyor (23) adapted for conveying packaging containers (17) past the application device (16), **characterised in that** the apparatus further comprises a pitch control device (25), positioned upstream the application device (16), that provides a pitch substantially equal between succeeding packaging containers and equal for all packaging sizes with an operational range of packaging sizes for the apparatus (100), the pitch (P) is the distance between corresponding points on two succeeding packaging containers.

8. The apparatus (100) according to claim 7, wherein the pitch control device (25) comprises a belt brake (26), which belt brake (26) comprises at least one belt which is adapted to act on the packaging container (17) during transportation of the packaging container on the first conveyor (23), and wherein the belt brake (26) is adapted to slow down the transportation of the packaging container (17) and to thereby make the packaging container slide against a packaging container conveyor surface of the first conveyor (23).

9. The apparatus (100) according to any of claims 7-8, wherein the pitch control device (25) comprises a second conveyor (27), wherein a packaging container conveyor surface of the second conveyor (27) is adapted to come into contact with the packaging container (17) once the packaging container reaches a downstream, outlet end of the belt brake (26), and the conveyor surfaces of the first and second conveyors (23, 27) are adapted to move with the same speed, and the belt of the belt brake (26) is adapted to move at a lower speed thereby creating the pitch (P) between two succeeding packaging containers.

10. The apparatus (100) according to any of claims 8 and 9, wherein the belt of the belt brake (26) and the packaging container conveyor surface of the first conveyor (23) extend, during portions thereof, parallel to each other along the transport direction.

11. The apparatus (100) according to any of claims 8-10, wherein the belt brake (26) is adapted to receive packaging containers (17) being transported on the first conveyor (23), and form a queue of said packaging containers (17), said queue being moved, by the belt, towards the outlet end of the belt brake (26).

12. The apparatus (100) according to any of claims 9-11, wherein the speed of the packaging container conveyor surfaces of the first and second conveyors (23, 27) in relation to the speed of the belt of the belt brake (26) create the pitch (P) between succeeding packaging containers (17), and wherein the pitch(P) is fixed to a set value.

13. The apparatus (100) according to any of the claims 7-12, wherein the drive means (1) is adapted for rotation, the separation device (8) is adapted to accompany a part distance of the rotation of the drive means (1), and the application device (16) is adapted to accompany a part distance of the movement of the first conveyor (23) during the application cycle.

14. The apparatus (100) according to any of the claims 8-13, wherein the apparatus comprises a sensing device (28) positioned downstream the belt brake (26), which sensing device (28) is adapted to detect a packaging container (17) being transported by the first conveyor (23), and wherein, during operation of the apparatus (100), the operation of the drive unit is adjusted, based on detection of a packaging container, such that the application cycle is correctly timed in relation to the position of the packaging container (17).

15. The apparatus (100) according to any of the claims 7-14, wherein the drive unit comprises a first servo motor, which first servo motor is adapted to drive the drive means (1) and the separation device (8), and wherein the drive unit comprises a second servo motor, which second servo motor is adapted to drive the application device (16).

## Patentansprüche

1. Verfahren zum Betreiben einer Einrichtung (100) zum Einbringen von Trinkhalmen (3) in Verpackungsbehälter (17), wobei das Verfahren die folgenden Schritte umfasst:
- Fördern von Verpackungsbehältern (17) auf einem ersten Förderband (23), vorbei an einer Einbringungsvorrichtung (16) und einem Antriebsmittel (1),
- Ausführen eines Trinkhalm-Einbringungszyklus durch eine synchrone Bewegung der Einbringungsvorrichtung und des Antriebsmittels, die folgenden Schritte umfassend:
- Fördern eines Endlosbands (2) von Trinkhalmen (3), die in Schutzhüllen gewickelt sind, durch Rotieren des Antriebsmittels (1),
- Trennen der Trinkhalme (3) mit der Hülle von dem Band (2) mittels einer Trennvorrichtung (8),
- Einbringen der getrennten Trinkhalme (3) mit Hülle an eine Wand des Verpackungsbehälters (17) mittels der Einbringungsvorrichtung (16), wenn der Verpackungsbehälter die Einbringungsvorrichtung passiert,
- synchrones Antreiben des Antriebsmittels (1), der Trennvorrichtung (8) und der Einbringungsvorrichtung (16) durch eine Antriebseinheit,
**dadurch gekennzeichnet, dass** das Verfahren ferner die folgenden Schritte umfasst:
- Einstellen eines ersten Abstands (P) zwischen den Verpackungsbehältern (17), die auf dem ersten Förderband (23) zur Einbringungsvorrichtung (16) transportiert werden, mittels einer Abstandssteuerungsvorrichtung (25) stromaufwärts der Einbringungsvorrichtung (16), so dass der Abstand im Wesentlichen gleich zwischen nachfolgenden Verpackungsbehältern und gleich für alle Verpackungsgrößen bei einem Betriebsbereich von Verpackungsgrößen für die Einrichtung (100) wird, wobei der Abstand (P) die Entfernung zwischen entsprechenden Punkten an zwei nachfolgenden Verpackungsbehältern ist.

2. Verfahren nach Anspruch 1, wobei das Verfahren während des Betriebs den Schritt des Antreibens der Antriebseinheit mit einem Minimum an Geschwindigkeitsvariationen umfasst.

3. Verfahren nach einem der Ansprüche 1-2, wobei das Verfahren während des Betriebs den Schritt des kontinuierlichen Antreibens der Antriebseinheit bei einer im Wesentlichen konstanten Geschwindigkeit umfasst.

4. Verfahren nach einem der Ansprüche 1-3, wobei das Verfahren den Schritt des Verlangsamens und Anstellens in Warteschlange der Verpackungsbehälter (17) in einer Bandbremse (26), die in der Abstandssteuerungsvorrichtung (25) umfasst ist, umfasst, wobei die Bandbremse (26) mindestens ein Band umfasst, das ausgelegt ist, um während des Transports des Verpackungsbehälters auf dem ersten Förderband (23) auf den Verpackungsbehälter auf eine solche Weise einzuwirken, dass der Verpackungsbehälter gegen eine Verpackungsbehälter-Förderbandoberfläche des ersten Förderbands (23) gleitet.

5. Verfahren nach Anspruch 4, wobei das Verfahren den Schritt des Herstellens des Abstands (P), indem ein zweites Förderband (27) in der Abstandssteuerungsvorrichtung (25) vorgesehen ist, wobei das zweite Förderband (27) eine Verpackungsbehälter-Förderbandoberfläche aufweist, die ausgelegt ist, um mit dem Verpackungsbehälter in Kontakt zu kommen, sobald der Verpackungsbehälter ein stromabwärts liegendes Auslassende der Bandbremse (26) erreicht, und des Bewegens der Förderbandoberflächen des ersten und des zweiten Förderbands (23, 27) mit der gleichen Geschwindigkeit umfasst, wobei die Geschwindigkeit höher ist als die des Bands der Bandbremse (26).

6. Verfahren nach einem der Ansprüche 4-5, wobei das Verfahren den Schritt des Antreibens des Antriebsmittels (1) und der Trennvorrichtung (7) durch einen ersten Servomotor, der in der Antriebseinheit umfasst ist, und des Antreibens der Einbringungsvorrichtung (16) durch einen zweiten Servomotor, der in der Antriebseinheit umfasst ist, umfasst.

7. Einrichtung (100) zum Einbringen von Trinkhalmen (3) in Verpackungsbehälter (17), umfassend
ein Antriebsmittel (1), das ausgelegt ist zum Fördern eines Endlosbands (2) von Trinkhalmen (3), die in Schutzhüllen gewickelt sind,
eine Trennvorrichtung (8), die ausgelegt ist, um einen Trinkhalm (3) mit Hülle von dem Band (2) zu trennen,
eine Einbringungsvorrichtung (16), die ausgelegt ist, um den getrennten Trinkhalm (3) mit Hülle an eine Wand des Verpackungsbehälters (17) einzubringen,
eine Antriebseinheit zum synchronen Antreiben des Antriebsmittels (1), der Trennvorrichtung (8) und der Einbringungsvorrichtung (16) mindestens während eines Trinkhalm-Einbringungszyklus,
ein erstes Förderband (23), das ausgelegt ist zum Fördern von Verpackungsbehältern (17) vorbei an der Einbringungsvorrichtung (16),
**dadurch gekennzeichnet, dass** die Einrichtung ferner eine Abstandssteuerungsvorrichtung (25) umfasst, die stromaufwärts der Einbringungsvorrichtung (16) positioniert ist, die einen Abstand bereitstellt, die im Wesentlichen gleich zwischen nachfolgenden Verpackungsbehältern und gleich für alle Verpackungsgrößen bei einem Betriebsbereich von Verpackungsgrößen für die Einrichtung (100) ist, wobei der Abstand (P) die Entfernung zwischen entsprechenden Punkten von zwei nachfolgenden Verpackungsbehältern ist.

8. Einrichtung (100) nach Anspruch 7, wobei die Abstandssteuerungsvorrichtung (25) eine Bandbremse (26) umfasst, wobei die Bandbremse (26) mindestens ein Band umfasst, das ausgelegt ist, um auf den Verpackungsbehälter (17) während des Transports des Verpackungsbehälters auf dem ersten Förderband (23) einzuwirken, und wobei die Bandbremse (26) ausgelegt ist, um den Transport des Verpackungsbehälters (17) zu verlangsamen und um somit den Verpackungsbehälter gegen eine Verpackungsbehälter-Förderbandoberfläche des ersten Förderbands (23) gleiten zu lassen.

9. Einrichtung (100) nach einem der Ansprüche 7-8, wobei die Abstandssteuerungsvorrichtung (25) ein zweites Förderband (27) umfasst, wobei die Verpackungsbehälter-Förderbandoberfläche des zweiten Förderbands (27) ausgelegt ist, um mit dem Verpackungsbehälter (17) in Kontakt zu kommen, sobald der Verpackungsbehälter ein stromabwärts gelegenes Auslassende der Bandbremse (26) erreicht, und wobei die Förderbandoberflächen des ersten und des zweiten Förderbands (23, 27) ausgelegt sind, um sich mit der gleichen Geschwindigkeit zu bewegen, und das Band der Bandbremse (26) ausgelegt ist, um sich mit einer geringeren Geschwindigkeit zu bewegen, wodurch der Abstand (P) zwischen zwei nachfolgenden Verpackungsbehältern erzeugt wird.

10. Einrichtung (100) nach einem der Ansprüche 8 und 9, wobei das Band der Bandbremse (26) und die Verpackungsbehälter-Förderbandoberfläche des ersten Förderbands (23) während Abschnitten davon sich parallel zueinander entlang der Transportrichtung erstrecken.

11. Einrichtung (100) nach einem der Ansprüche 8-10, wobei die Bandbremse (26) ausgelegt ist, um Verpackungsbehälter (17), die auf dem ersten Förderband (23) transportiert werden, aufzunehmen und eine Warteschlange der Verpackungsbehälter (17) zu bilden, wobei die Warteschlange durch das Band zu dem Auslassende der Bandbremse (26) bewegt wird.

12. Einrichtung (100) nach einem der Ansprüche 9-11, wobei die Geschwindigkeit der Verpackungsbehälter-Förderbandoberflächen des ersten und des zweiten Förderbands (23, 27) im Verhältnis zu der Geschwindigkeit des Bands der Bandbremse (26) den Abstand (P) zwischen nachfolgenden Verpackungsbehältern (17) erzeugt, und wobei der Abstand (P) an einen eingestellten Wert gebunden ist.

13. Einrichtung (100) nach einem der Ansprüche 7-12, wobei das Antriebsmittel (1) ausgelegt ist zur Rotation, die Trennvorrichtung (8) ausgelegt ist, um eine Teilstrecke der Rotation des Antriebsmittels (1) zu begleiten, und die Einbringungsvorrichtung (16) ausgelegt ist, um eine Teilstrecke der Bewegung des ersten Förderbands (23) während des Einbringungszyklus zu begleiten.

14. Einrichtung (100) nach einem der Ansprüche 8-13, wobei die Einrichtung eine Erfassungsvorrichtung (28) umfasst, die stromabwärts der Bandbremse (26) positioniert ist, wobei die Erfassungsvorrichtung (28) ausgelegt ist, um einen Verpackungsbehälter (17) zu detektieren, der von dem ersten Förderband (23) transportiert wird, und wobei während des Betriebs der Einrichtung (100) der Betrieb der Antriebseinheit eingestellt wird basierend auf der Detektion eines Verpackungsbehälters, so dass der Einbringungszyklus im Verhältnis zur Position des Verpackungsbehälters (17) korrekt zeitlich abgestimmt ist.

15. Einrichtung (100) nach einem der Ansprüche 7-14, wobei die Antriebseinheit einen ersten Servomotor umfasst, wobei der erste Servomotor ausgelegt ist, um das Antriebsmittel (1) und die Trennvorrichtung (8) anzutreiben, und wobei die Antriebseinheit einen zweiten Servomotor umfasst, wobei der zweite Servomotor ausgelegt ist, um die Einbringungsvorrichtung (16) anzutreiben.

## Revendications

1. Procédé de fonctionnement d'un appareil (100) destiné à appliquer des pailles à boire (3) à des récipients d'emballage (17), le procédé comprenant les étapes consistant à:
- transporter les récipients d'emballage (17), sur un premier transporteur (23), devant un dispositif d'application (16) et un moyen d'entraînement (1),
- réaliser un cycle d'application de paille par un mouvement synchrone du dispositif d'application et du moyen d'entraînement, comprenant les étapes consistant à:
- transporter une bande continue (2) de pailles à boire (3) enveloppées dans des enveloppes de protection par rotation du moyen d'entraînement (1),
- séparer la paille à boire (3) avec enveloppe de la bande (2) au moyen d'un dispositif de séparation (8),
- appliquer la paille à boire séparée (3) avec l'enveloppe sur une paroi du récipient d'emballage (17) au moyen du dispositif d'application (16) lorsque le récipient d'emballage passe devant le dispositif d'application,
- entraîner de manière synchrone le moyen d'entraînement (1), le dispositif de séparation (8) et le dispositif d'application (16) par une unité d'entraînement, **caractérisé**
**en ce que** le procédé comprend en outre les étapes consistant à:
- ajuster un pas (P), entre les récipients d'emballage (17) transportés sur le premier transporteur (23) vers le dispositif d'application (16), au moyen d'un dispositif de commande de pas (25) en amont du dispositif d'application (16), de sorte que le pas devient sensiblement égal entre des récipients d'emballage consécutifs et égal pour toutes les tailles d'emballage présentant une plage opérationnelle de tailles d'emballage pour l'appareil (100), le pas (P) étant la distance entre des points correspondants sur deux récipients d'emballage consécutifs.

2. Procédé selon la revendication 1, le procédé comprenant l'étape consistant à, pendant le fonctionnement, entraîner l'unité d'entraînement avec un minimum de variations de vitesse.

3. Procédé selon l'une quelconque des revendications 1 à 2, le procédé comprenant l'étape consistant à, pendant le fonctionnement, entraîner l'unité d'entraînement en continu à une vitesse sensiblement constante.

4. Procédé selon l'une quelconque des revendications 1 à 3, le procédé comprenant l'étape consistant à ralentir et à mettre en file d'attente les récipients d'emballage (17) dans un frein à bande (26) compris dans le dispositif de commande de pas (25), ledit frein à bande (26) comprenant au moins une bande qui est adaptée pour agir sur le récipient d'emballage pendant le transport du récipient d'emballage sur le premier transporteur (23), de telle sorte que le récipient d'emballage glisse contre une surface de transport du récipient d'emballage du premier transporteur (23).

5. Procédé selon la revendication 4, le procédé comprenant l'étape consistant à produire le pas (P) en fournissant un second transporteur (27) dans le dispositif de commande de pas (25), ledit second transporteur (27) ayant une surface de transport de récipient d'emballage adaptée pour venir en contact avec le récipient d'emballage lorsque le récipient d'emballage atteint une extrémité aval de sortie du frein à bande (26), et à déplacer les surfaces de transport des premier et second transporteurs (23, 27) à la même vitesse, ladite vitesse étant supérieure à celle de la bande du frein à bande (26).

6. Procédé selon l'une quelconque des revendications 4 à 5, le procédé comprenant l'étape consistant à entraîner le moyen d'entraînement (1) et le dispositif de séparation (7) par un premier servomoteur compris dans l'unité d'entraînement, et à entraîner le dispositif d'application (16) par un second servomoteur compris dans l'unité d'entraînement.

7. Appareil (100) destiné à appliquer des pailles à boire (3) à des récipients d'emballage (17), comprenant,
un moyen d'entraînement (1) adapté pour transporter une bande continue (2) de pailles à boire (3) enveloppées dans des enveloppes de protection,
un dispositif de séparation (8) adapté pour séparer
une paille à boire (3) avec enveloppe de la bande (2),
un dispositif d'application (16) adapté pour appliquer la paille à boire séparée (3) avec enveloppe sur une paroi du récipient d'emballage (17),
une unité d'entraînement pour entraîner de manière synchrone le moyen d'entraînement (1), le dispositif de séparation (8) et le dispositif d'application (16) au moins pendant un cycle d'application de paille,
un premier transporteur (23) adapté pour transporter des récipients d'emballage (17) devant le dispositif d'application (16), **caractérisé en ce que** l'appareil comprend en outre un dispositif de commande de pas (25), positionné en amont du dispositif d'application (16), qui fournit un pas sensiblement égal entre des récipients d'emballage consécutifs et égal pour toutes les tailles d'emballage présentant une gamme opérationnelle de tailles d'emballage pour l'appareil (100), le pas (P) étant la distance entre des points correspondants sur deux récipients d'emballage consécutifs.

8. Appareil (100) selon la revendication 7, dans lequel le dispositif de commande de pas (25) comprend un frein à bande (26), lequel frein à bande (26) comprend au moins une bande qui est adaptée pour agir sur le récipient d'emballage (17) pendant le transport du récipient d'emballage sur le premier transporteur (23), et dans lequel le frein à bande (26) est adapté pour ralentir le transport du récipient d'emballage (17) et pour faire ainsi glisser le récipient d'emballage contre une surface de transport de récipient d'emballage du premier transporteur (23).

9. Appareil (100) selon l'une quelconque des revendications 7-8, dans lequel le dispositif de commande de pas (25) comprend un second transporteur (27), une surface de transport de récipient d'emballage du second transporteur (27) étant adaptée pour venir en contact avec le récipient d'emballage (17) lorsque le récipient d'emballage atteint une extrémité aval de sortie du frein à bande (26), et les surfaces de transport des premier et second transporteurs (23, 27) étant adaptées pour se déplacer à la même vitesse, et la bande du frein à bande (26) étant adaptée pour se déplacer à une vitesse inférieure créant ainsi le pas (P) entre deux récipients consécutifs.

10. Appareil (100) selon l'une quelconque des revendications 8 et 9, dans lequel la bande du frein à bande (26) et la surface de transport du récipient d'emballage du premier transporteur (23) s'étendent, à travers des parties de celui-ci, parallèlement l'une à l'autre dans la direction de transport.

11. Appareil (100) selon l'une quelconque des revendications 8 à 10, dans lequel le frein à bande (26) est adapté pour recevoir des récipients d'emballage (17) transportés sur le premier transporteur (23), et former une file d'attente desdits récipients d'emballage (17), ladite file d'attente étant déplacée, par la bande, vers l'extrémité de sortie du frein à bande (26).

12. Appareil (100) selon l'une quelconque des revendications 9 à 11, dans lequel la vitesse des surfaces de transport des récipients d'emballage des premier et second transporteurs (23, 27) par rapport à la vitesse de la bande du frein à bande (26) crée le pas (P) entre les récipients d'emballage (17) consécutifs, et dans lequel le pas (P) est fixé à une valeur définie.

13. Appareil (100) selon l'une quelconque des revendications 7 à 12, dans lequel le moyen d'entraînement (1) est adapté pour tourner, le dispositif de séparation (8) est adapté pour accompagner la rotation du moyen d'entraînement (1) sur une certaine distance, et le dispositif d'application (16) est adapté pour accompagner le mouvement du premier transporteur (23) sur une certaine distance pendant le cycle d'application.

14. Appareil (100) selon l'une quelconque des revendications 8 à 13, l'appareil comprenant un dispositif de détection (28) positionné en aval du frein à bande (26), lequel dispositif de détection (28) est adapté pour détecter un récipient d'emballage (17) transporté par le premier transporteur (23), et, pendant le fonctionnement de l'appareil (100), l'opération de l'unité d'entraînement étant réglée, sur la base de la détection du récipient d'emballage, de sorte que le cycle d'application soit correctement synchronisé par rapport à la position du récipient d'emballage (17).

15. Appareil (100) selon l'une quelconque des revendications 7 à 14, dans lequel l'unité d'entraînement comprend un premier servomoteur, lequel premier servomoteur est adapté pour entraîner le moyen d'entraînement (1) et le dispositif de séparation (8), et l'unité d'entraînement comprenant un second servomoteur, lequel second servomoteur est adapté pour entraîner le dispositif d'application (16).
